# EUROPEAN PATENT APPLICATION

(11) **EP 3 522 546 A1**
(43) Date of publication of application: **07.08.2019**
(21) Application number: 18869470.7
(22) Date of filing: 09.02.2018
(51) Int. Cl.: H04N 21/435, H04N 21/4363

(54) **EPG INFORMATION EXTENSION METHOD AND DEVICE, AND COMPUTER READABLE STORAGE MEDIUM**

(30) Priority: 06.11.2017 CN 201711081964
(71) Applicant: Shenzhen Skyworth-RGB Electronic Co., Ltd., Shenzhen, Guangdong 518057 (CN)
(72) Inventor: WU, Wenhui, Shenzhen, Guangdong 518057 (CN)
(74) Representative: Osterhoff, Utz
(86) International application number: PCT/CN2018/075900
(87) International publication number: WO 2019/085323

(57) **Abstract**

The present disclosure discloses a method for augmenting information of Electronic Program Guide, including: acquiring an enhanced EPG file corresponding to an EPG information viewing instruction when the EPG information viewing instruction is received, characterized in that, the enhanced EPG file comprises EPG supplementary information and program information; generating target EPG information based on the acquired EPG supplementary information, updating and displaying an EPG interface corresponding to the target EPG information; and closing the EPG interface and displaying the program information, when an interface closing instruction which is triggered based on the EPG interface is received. The present disclosure also discloses an EPG information augmenting device and a computer readable storage medium. According to the present disclosure, television program guide with richer information is provided for users by combining the Internet, and program information is also provided for users to conveniently learn more about programs while watching.

## Description

The present application claims the priority of a Chinese patent application filed in the China patent office on November 6, 2017, with application No.201711081964.3 and the title " METHOD AND DEVICE FOR AUGMENTING INFORMATION OF ELECTRONIC PROGRAM GUIDE, AND COMPUTER READABLE STORAGE MEDIUM", the entire contents of which are hereby incorporated by reference.

### FIELD

The present disclosure relates to the field of digital television, and in particular, relates to a method and device for augmenting information of Electronic Program Guide, and a computer readable storage medium.

### BACKGROUND

Interactive Internet Protocol Television (IPTV), which is a TV broadcasting service based on IP protocol, has been widely used with the continuous improvement of broadband operators' services. IPTV is an emerging business that provides users with accurate digital multimedia services by virtue of Internet wired network resources. Electronic program guide (EPG) system is the portal system of IPTV business, and mainly completes interaction with users, analysis and interaction of users' commands and transmission of the results back to users, to guide users to enjoy IPTV service. Electronic program guide has been widely used in United States and Europe where digital TV has been early developed, and has become one of the basic services of digital TV. EPG is mainly used to provide program menus, help to select personal favorite multicast channels, order personal favorite video programs, and search for various information provided by IPTV.

EPG has become an important label of digital television. However, at present, the EPG information generally merely includes some basic contents such as program name, program introduction, program playback time, and so on, which would gradually be unable to meet the requirements of users. Users tend to obtain more abundant program information in a convenient way, that is, to obtain richer and more diverse program information through EPG, such as program-related big posters or preview clips, etc.

The above content is only used for understanding the technical schemes of the present disclosure, and does not mean to admit that the above content is the prior Art.

### SUMMARY

The main purpose of the present disclosure is to provide a method and a device for augmenting information of EPC, and a computer readable storage medium, aiming at obtaining richer and more diverse EPG information in a convenient way.

In order to achieve the above object, the present disclosure provides a method for augmenting information of EPG including:
acquiring an enhanced Electronic Program Guide file corresponding to an EPG information viewing instruction, when the EPG information viewing instruction is received, and the enhanced Electronic Program Guide file includes EPG supplementary information and program information;
generating target EPG information based on the acquired EPG supplementary information, and updating and displaying an EPG interface corresponding to the target EPG information; and
closing the EPG interface and displaying the program information, when an interface closing instruction which is triggered based on the EPG interface is received.

And, the operation of acquiring an enhanced Electronic Program Guide file corresponding to an EPG information viewing instruction when the EPG information viewing instruction is received include:
acquiring program information of the program currently played by an IPTV terminal and corresponding program channel information, when an EPG information viewing instruction is received; and
acquiring EPG supplementary information based on the program channel, and acquiring program information based on the current program.

And, the operation of acquiring EPG supplementary information based on the program channel, and acquiring program information based on the current program includes:
requesting a packaged enhanced Electronic Program Guide file from a server terminal through a network, based on the program information of the program currently played by the IPTV terminal and the corresponding program channel information; and
processing the enhanced Electronic Program Guide file according to a preset rule to restore the enhanced Electronic Program Guide file to EPG supplementary information and program information, when the enhanced Electronic Program Guide file is required.

And, the operation of generating target EPG information based on the acquired EPG supplementary information, and updating and displaying an EPG interface corresponding to the target EPG information includes:
adding the EPG supplementary information to an EPG interface, when the EPG supplementary information is acquired through a network; and
generating target EPG information based on the EPG supplementary information, and updating and displaying the EPG interface based on the target EPG information.

And, the operation of closing the EPG interface and displaying the program information, when an interface closing instruction which is triggered based on the EPG interface is received includes:
closing the EPG interface, when an interface closing instruction which is triggered based on the EPG interface is acquired, acquiring corresponding program information according to the program currently played by a IPTV terminal, displaying a prompt page corresponding to the program information, and determining whether to display the program information; and
scaling down the currently played program interface and displaying the program information at a preset position, when a consent-to-update instruction which is triggered based on the prompt page is acquired.

And, after the operation of closing the EPG interface and displaying the program information, when an interface closing instruction which is triggered based on the EPG interface is receive, the method also includes:
acquiring corresponding program information according to the program currently played by a IPTV terminal, displaying a prompt page corresponding to the program information, and determining whether to display the program information, when displaying and closing the Electronic Program Guide interface is implemented for a second time; and
scaling down the currently played program interface and displaying the program information at a preset position, when a consent-to-update instruction which is triggered based on the prompt page is acquired.

The method for augmenting information of EPG also includes:
displaying a prompt page corresponding to the program information and determining whether to display the program information, when program information corresponding to a program currently played by an IPTV and pushed by a service terminal is received; and
scaling down the currently played program interface and displaying the program information at a preset position, when a consent-to-update instruction which is triggered based on the prompt page is acquired.

After the operation of displaying a prompt page corresponding to the program information and determining whether to display the program information, the method also include:
closing the prompt page, when a rejection-to-update instruction which is triggered based on the prompt page is acquired.

In addition, in order to achieve the above object, the disclosure also provides an EPG information augmenting device, and the device include: a memory, a processor, and an EPG information augmenting program stored in the memory and running on the processor, and when the EPG information augmenting program is executed by the processor, the following operations are i mpl emented:
acquiring an enhanced Electronic Program Guide file corresponding to an EPG information viewing instruction, when the EPG information viewing instruction is received, and the enhanced Electronic Program Guide file includes EPG supplementary information and program information;
generating target EPG information based on the acquired EPG supplementary information, and updating and displaying an EPG interface corresponding to the target EPG information; and
closing the EPG interface and displaying the program information, when an interface closing instruction which is triggered based on the EPG interface is received.

When the EPG information augmenting program is executed by the processor, the following operations are further implemented:
acquiring corresponding program information according to the program currently played by a IPTV terminal, displaying a prompt page corresponding to the program information, and determining whether to display the program information, when displaying and closing the Electronic Program Guide interface is implemented for a second time; and
scaling down the currently played program interface and displaying the program information at a preset position, when a consent-to-update instruction which is triggered based on the prompt page is acquired.

When the EPG information augmenting program is executed by the processor, the following operations are further implemented:
displaying a prompt page corresponding to the program information and determining whether to display the program information, when program information corresponding to a program currently played by an IPTV and pushed by a service terminal is received; and
scaling down the currently played program interface and displaying the program information at a preset position, when a consent-to-update instruction which is triggered based on the prompt page is acquired.

In addition, in order to achieve the above object, the present disclosure also provides a computer readable storage medium, and an EPG information augmenting program is stored in the computer readable storage medium, and when the EPG information augmenting program is executed by a processor, the following operations are implemented:
acquiring an enhanced Electronic Program Guide file corresponding to an EPG information viewing instruction, when the EPG information viewing instruction is received, and the enhanced Electronic Program Guide file includes EPG supplementary information and program information;
generating target EPG information based on the acquired EPG supplementary information, and updating and displaying an EPG interface corresponding to the target EPG information; and
closing the EPG interface and displaying the program information, when an interface closing instruction which is triggered based on the EPG interface is received.

When the EPG information augmenting program is executed by a processor, the following operations are further implemented:
acquiring corresponding program information according to the program currently played by a IPTV terminal, displaying a prompt page corresponding to the program information, and determining whether to display the program information, when displaying and closing the Electronic Program Guide interface is implemented for a second time; and
scaling down the currently played program interface and displaying the program information at a preset position, when a consent-to-update instruction which is triggered based on the prompt page is acquired.

According to the present disclosure, an enhanced Electronic Program Guide file corresponding to an EPG information viewing instruction is required, when the EPG information viewing instruction is received, and the enhanced Electronic Program Guide file includes EPG supplementary information and program information; then target EPG information is generated based on the acquired EPG supplementary information, and updating and displaying an EPG interface corresponding to the target EPG information; then the EPG interface is closed and the program information is displayed, when an interface closing instruction which is triggered based on the EPG interface is received. According to the present disclosure, through the Internet, EPG display content is enriched, currently played program information and recommended content is provided, so that the viewing experience is improved without disturbing program watching. television program guide with richer information is provided for users by combining the Internet, and program information is also provided for users, so that users may conveniently learn more about programs while watching.

### BRIEF DESCRIPTION OF THE DRAWINGS

Fig. 1 is a schematic structural diagram of a terminal to which a device for augmenting information of Electronic Program Guide belongs running in a hardware according to some embodiments of the present disclosure;
FIG. 2 is a flowchart of a method for augmenting information of Electronic Program Guide according to a first embodiment of the present disclosure;
Fig. 3 is a detailed flow diagram of the operation of acquiring an enhanced Electronic Program Guide file corresponding to an EPG information viewing instruction when the EPG information viewing instruction is received of the EPG information augmenting method in a second embodiment of the present disclosure;
Fig. 4 is a detailed flowchart of the operation of acquiring EPG supplementary information based on the program channel, and acquiring program information based on the current program of the EPG information augmenting method in a third embodiment of the present disclosure;
Fig. 5 is a detailed flowchart of the operation of generating target EPG information based on the acquired EPG supplementary information, and updating and displaying an EPG interface corresponding to the target EPG information of the EPG information augmenting method in a fourth embodiment of the present disclosure;
Fig. 6 is a detailed flowchart of the operation of closing the EPG interface and displaying the program information when an interface closing instruction which is triggered based on the EPG interface is received of the EPG information augmenting method in a fifth embodiment of the present disclosure:
FIG. 7 is a flowchart of an EPG information augmenting method in a sixth embodiment of the present disclosure;
FIG. 8 is a flowchart of an EPG information augmenting method in a seventh embodiment of the present disclosure.

The implementation, functional features and advantages of the present disclosure will be further described with reference to the drawings in combination with the embodiments.

### DETAILED DESCRIPTION OF THE EMBODIMENTS

It should be understood that the specific embodiments described herein are only for the purpose of explaining the present disclosure and are not intended to limit the present disclosure.

Terminals in the embodiments of the present disclosure may be a PC, or a mobile terminal device with display function such as a smart phone, a tablet computer, an e-book reader, an MP3 (Moving Picture Experts Group Audio Layer III) player, an MP4 (Moving Picture Experts Group Audio Layer IV) player, and a portable computer.

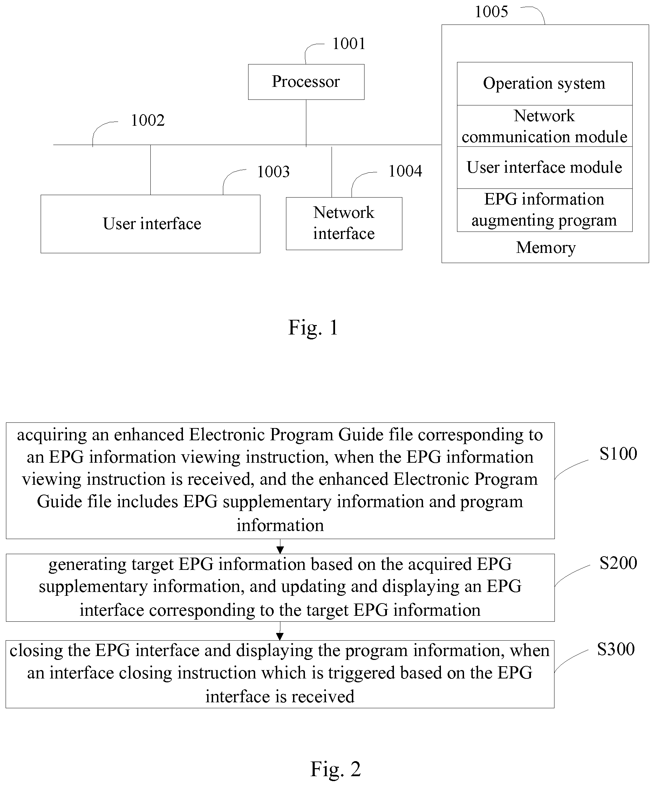

As shown in fig. 1, the terminal may include a processor 1001, such as a CPU, a network interface 1004, a user interface 1003, a memory 1005, and a communication bus 1002. And, the communication bus 1002 is used for connection and communication between these components. The user interface 1003 may include a display, an input unit such as a Keyboard, and optional user interface 1003 may also include a standard wired interface and a wireless interface. The network interface 1004 may optionally include a standard wired interface and a wireless interface (such as a WI-FI interface). The memory 1005 may be a high-speed RAM memory or a non-volatile memory such as a disk memory. The memory 1005 may optionally be a storage device independent from the aforementioned processor 1001.

Optionally, the terminal may also include a camera, a RF(Radio Frequency) circuitry, a sensor, an audio circuitry, a WiFi modules, etc. And, the sensor may be a light sensor, a motion sensor or other sensor. Specifically, the light sensor may include an ambient light sensor and a proximity sensor, the ambient light sensor may adjust the brightness of the display screen according to the brightness of ambient light, and the proximity sensor may turn off the display screen and/or backlight when the mobile terminal moves to ear. As one of motion sensors, a gravity acceleration sensor may detect the magnitude of acceleration in all directions (generally three axes). When being stationary, a gravity acceleration sensor may detect the magnitude and direction of gravity, which may identify mobile terminal posture applications (such as horizontal and vertical screen switching, related games, magnetometer posture calibration), vibration identification related functions (such as pedometer, tapping), etc. Of course, the mobile terminal may also be equipped with gyroscopes, barometers, hygrometers, thermometers, infrared sensors and other sensors, which will not be described here.

Those skilled in the art may understand that the terminal structure shown in fig. 1 does not constitute a limitation on the terminal, and the terminal may include more or fewer components than that is shown, or the terminal may include combination of some components combined, or include different component arrangements.

As shown in fig. 1, a memory 1005 as a computer storage medium may include an operation system, a network communication module, a user interface module, and an EPG information augmenting program.

In the terminal shown in fig. 1, the network interface 1004 is mainly used to connect with a background server and perform data communication with the background server. The user interface 1003 is mainly used to connect the client (user) and carry out data communication with the client. While the processor 1001 may be used to call the EPG information extension program stored in the memory 1005.

In this embodiment, the EPG information augmenting device includes a memory 1005, a processor 1001, and an EPG information augmenting program stored in the memory 1005 and executable on the processor 1001, and when the processor 1001 calls the EPG information augmenting program stored in the memory 1005, it performs the following operations:
acquiring an enhanced Electronic Program Guide file corresponding to an EPG information viewing instruction, when the EPG information viewing instruction is received, and the enhanced Electronic Program Guide file includes EPG supplementary information and program information;
generating target EPG information based on the acquired EPG supplementary information, and updating and displaying an EPG interface corresponding to the target EPG information; and
closing the EPG interface and displaying the program information, when an interface closing instruction which is triggered based on the EPG interface is received.

The processor 1001 may call the EPG information augmenting program stored in the memory 1005, and also perform the following operations:
acquiring program information of the program currently played by an IPTV terminal and corresponding program channel information, when an EPG information viewing instruction is received; and
acquiring EPG supplementary information based on the program channel, and acquiring program information based on the current program.

The processor 1001 may call the EPG information augmenting program stored in the memory 1005, and also perform the following operations:
requesting a packaged enhanced Electronic Program Guide file from a server terminal through a network, based on the program information of the program currently played by the IPTV terminal and the corresponding program channel information; and
processing the enhanced Electronic Program Guide file according to a preset rule to restore the enhanced Electronic Program Guide file to EPG supplementary information and program information, when the enhanced Electronic Program Guide file is required.

The processor 1001 may call the EPG information augmenting program stored in the memory 1005, and also perform the following operations:
adding the EPG supplementary information to an EPG interface, when the EPG supplementary information is acquired through a network; and
generating target EPG information based on the EPG supplementary information, and updating and displaying the EPG interface based on the target EPG information.

The processor 1001 may call the EPG information augmenting program stored in the memory 1005, and also perform the following operations:
closing the EPG interface, when an interface closing instruction which is triggered based on the EPG interface is acquired, acquiring corresponding program information according to the program currently played by a IPTV terminal, displaying a prompt page corresponding to the program information, and determining whether to display the program information; and
scaling down the currently played program interface and displaying the program information at a preset position, when a consent-to-update instruction which is triggered based on the prompt page is acquired.

The processor 1001 may call the EPG information augmenting program stored in the memory 1005, and also perform the following operations:
acquiring corresponding program information according to the program currently played by a IPTV terminal, displaying a prompt page corresponding to the program information, and determining whether to display the program information, when displaying and closing the Electronic Program Guide interface is implemented for a second time; and
scaling down the currently played program interface and displaying the program information at a preset position, when a consent-to-update instruction which is triggered based on the prompt page is acquired.

The processor 1001 may call the EPG information augmenting program stored in the memory 1005, and also perform the following operations:
displaying a prompt page corresponding to the program information and determining whether to display the program information, when program information corresponding to a program currently played by an IPTV and pushed by a service terminal is received; and
scaling down the currently played program interface and displaying the program information at a preset position, when a consent-to-update instruction which is triggered based on the prompt page is acquired.

The processor 1001 may call the EPG information augmenting program stored in the memory 1005, and also perform the following operations:
closing the prompt page, when a rejection-to-update instruction which is triggered based on the prompt page is acquired.

A first embodiment of the present disclosure provides a method for augmenting information of EPG. Referring to fig. 2, fig. 2 is a flow chart of the method for augmenting information of EPG in the first embodiment of the present disclosure. The method for augmenting information of EPG includes:
operation S100, acquiring an enhanced Electronic Program Guide file corresponding to an EPG information viewing instruction, when the EPG information viewing instruction is received, and the enhanced Electronic Program Guide file includes EPG supplementary information and program information;
EPG (Electronic Program Guide) is a graphical interface that provides users with various program information. The interface commonly includes information such as program name, channel, and broadcast time. Users may use the program menu provided by EPG to select their favorite multicast channels and programs. With the development of Internet Protocol Television (IPTV), EPG has been widely used as a portal system for IPTV services, and has become one of the basic services of IPTV. Its main function is to serve as a user interface for analyzing and interacting with user commands and sending the results back to users, providing guidance for users, and finally enabling users to enjoy IPTV services.

Enhanced EPG content refers to all multimedia information that is required to be displayed on the EPG interface, including EPG supplementary information and program information. The EPG supplementary information mainly includes content to be displayed such as program posters, channel icons, and program preview segment. Program information mainly includes content such as related program recommendation, personnel information, and user comments. Enhanced EPG content may be made by building a server independently, or by using a third-party service platform. The materials used for making EPG supplementary information, such as program posters, channel icons, and program preview clips, may use relevant contents produced by TV program operators or relevant contents produced by a third party service platform itself. Materials used for making program information, such as related program recommendation, personnel information, user comments, and previous programs, may adopt various materials, and be displayed in a way of a combination of poster and text introduction, and may also be added with broadcast addresses of related movie and television content or previous programs in forms such as menus, button, and link that the user may directly click when selecting programs.

Users may enter an IPTV menu through a remote controller or the like, select EPG options in the menu, and then trigger an EPG information viewing instruction based on the menu interface. When IPTV obtains the EPG information viewing instruction, the EPG interface may be fed back to the IPTV screen. And, the IPTV terminal acquires enhanced EPG content stored in a self-built server or a third-party service platform by the network based on the current program content.
operation S200, generating target EPG information based on the acquired EPG supplementary information, and updating and displaying an EPG interface corresponding to the target EPG information;
Target EPG information refers to EPG information formed by synthesizing EPG supplementary information with existing EPG information. When an IPTV terminal obtains the enhanced EPG content corresponding to a current program, it adds channel icon, program big poster, and the program preview segment to the existing EPG information through the web. Specifically, the channel icon of relevant channel may be displayed according to a channel number. Poster and program preview segment of a current played program, as well as those of programs to be played on the channel in other time, may be displayed according to the program number and the channel number. When the target EPG information is generated, the EPG interface is updated, and the generated target EPG information is displayed on the current EPG interface.

Operation S300, closing the EPG interface and displaying the program information, when an interface closing instruction which is triggered based on the EPG interface is received.

When no interface close instruction triggered from an EPG interface is received, keep the EPG interface containing target EPG information; When an interface closing instruction triggered based on the EPG interface is received, close the EPG interface and pops up a prompt to ask whether it is required to watch program information of a currently played program, and the program information includes related program recommendation, personnel information, and users' comments. If a user does not need to view the program information, he or she may close the prompt box through a remote controller or other similar operations. If a user wants to view the program information, the user may enter a display page of the program information based on the prompt box. At this time, IPTV processes the current display as scaling down the TV play image, leaving a space on the left or right side of the TV for displaying recommended films, previous programs, related personnel information, etc. that are related to the program. This is to enable users to watch program normally while browsing the information, thus improving the experience.

According to the method for augmenting information of EPG provided in this embodiment, an enhanced Electronic Program Guide file corresponding to an EPG information viewing instruction is acquired, when the EPG information viewing instruction is received, and the enhanced Electronic Program Guide file includes EPG supplementary information and program information; then target EPG information is generated based on the acquired EPG supplementary information, and updating and displaying an EPG interface corresponding to the target EPG information; then the EPG interface is closed and the program information is displayed, when an interface closing instruction which is triggered based on the EPG interface is acquired. According to the present disclosure, through the Internet, EPG display content is enriched, currently played program information and recommended content is provided, so that the viewing experience is improved without disturbing program watching. Television program guide with richer information is provided for users by combining the Internet, and program information is also provided for users, so that users may conveniently learn more about programs while watching.

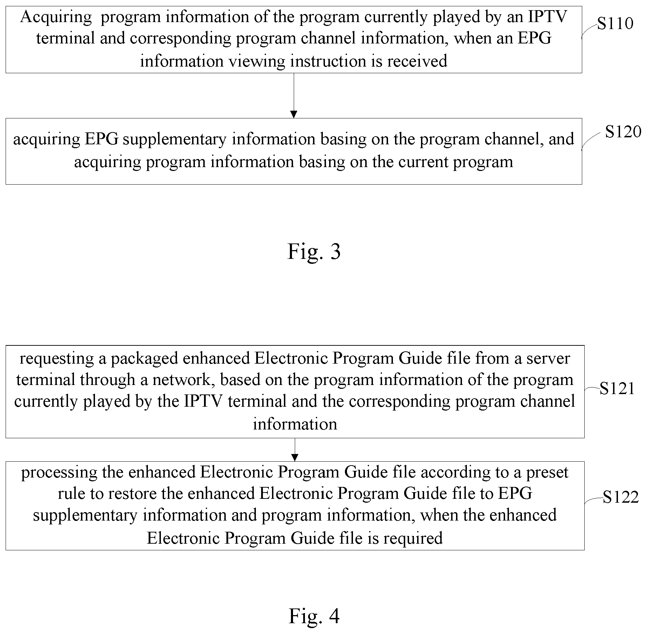

Based on the first embodiment, a second embodiment of the method for augmenting information of EPG of the present disclosure is proposed. Referring to fig. 3, operation S100 includes:
operation S110, acquiring program information of the program currently played by an IPTV terminal and corresponding program channel information, when an EPG information viewing instruction is received.

Users may enter an IPTV menu through a remote controller or the like, select EPG options in the menu, and then trigger an EPG information viewing instruction based on the menu interface. When IPTV obtains the EPG information viewing instruction, program information currently played by the IPTV and corresponding program channel information may be obtained in real time. The program information refers to the specific name of a program currently played by a TV terminal, the program type and program information different from other programs. The program channel information refers to the TV channel on which the currently played program plays, commonly refers to each TV station. For example, if the program played by the IPTV terminal is a TV play named B played on the channel that belongs to TV station A, then the currently played program information to be required is B, and the program channel information is A, when a user needs to view EPG information. For each program played in IPTV terminal, there should be program information and program channel information which is different from other programs.

Operation S120, acquiring EPG supplementary information based on the program channel, and acquiring program information based on the current program.

When IPTV acquires an EPG information viewing instruction, the EPG interface may be fed back to the IPTV screen. And, the IPTV terminal acquires enhanced EPG content stored in a self-built server or a third-party service platform by the network based on the current program content. Enhanced EPG content refers to all multimedia information that is required to be displayed on the EPG interface, including EPG supplementary information and program information. The EPG supplementary information mainly includes content to be displayed such as program posters, channel icons, and program preview segment. Program information mainly includes content such as related program recommendation, personnel information, and user comments. Therefore, EPG supplementary information such as program posters, channel icons, and program preview clips are acquired based on program channel information, and program information such as program recommendation, personnel information, user comments, and previous programs are acquired based on current program.

According to the method for augmenting information of EPG provided in the embodiment, program information of the program currently played by an IPTV terminal and corresponding program channel information is acquired, when an EPG information viewing instruction is received; EPG supplementary information is acquired based on the program channel, and program information is acquired based on the current program. The dimensions of EPG interface display are enriched through various multimedia information, which may better improve user's watching experience and provide more diverse sources for user to learn about related background of program and channel.

Based on the second embodiment, a third embodiment of the method for augmenting information of EPG of the present disclosure is proposed. Referring to fig. 4, operation S120 includes:
operation S121, requesting a packaged enhanced Electronic Program Guide file from a server terminal through a network, based on the program information of the program currently played by the IPTV terminal and the corresponding program channel information;
IPTV uses the network to transmit programs through the Internet Protocol. IP protocol, also referred as Internet protocol, is a protocol designed for computer networks to communicate with each other. It may connect multiple networks that exchange packets and transfer something called data packets between source and destination addresses. In the Internet, it is a set of rules that enable all computer networks connected to the Internet to communicate with each other. It stipulates the rules that computers should abide by when communicating on the Internet. Computer systems produced by any manufacturer may be interconnected with the Internet as long as they comply with the IP protocol.

Enhanced EPG content may be made by building a server independently, or by using a third-party service platform. When an Internet server or a third party collects and makes enhanced EPG content, the content is encapsulated into json data for IPTV to request. When a request sent by an IPTV terminal is received, send the encapsulated json data to the IPTV terminal through a self-built server or a third-party service platform.

After that, when IPTV terminal obtains the encapsulated data, it needs to carry out analysis of the encapsulated data before using it as EPG supplementary information and program information.

JSON (JavaScript Object Notation) is a text-based and language-independent lightweight data exchange format. It is based on a subset of ECMAScript (js specification formulated by W3C) and uses a text format completely independent from the programming language to store and represent data. The concise and clear hierarchy makes JSON an ideal data exchange language. It is not only easy for people to read and write, but also easy for machines to analyze and generate, effectively improving the efficiency of network transmission.

Operation S122, processing the enhanced Electronic Program Guide file according to a preset rule to restore the enhanced Electronic Program Guide file to EPG supplementary information and program information, when the enhanced Electronic Program Guide file is required.

In the process of obtaining EPG enhanced content encapsulated by json, the target content needs to be encapsulated first. The server converts the data into json character strings, which are sent to IPTV terminal by the server. Then the json data is analyzed at IPTV terminal, and the json character strings are converted into corresponding javaBean, so that the content that may be normally used may be obtained. Data Encapsulation refers to mapping service data into the payload of a certain encapsulation protocol, then filling the packet header of the corresponding protocol to form the data packet of the encapsulation protocol and completing the rate adaptation. Analysis is the inverse process of encapsulation, dismantling the protocol package, processing the information in the packet header and taking out the service information in the payload. Data encapsulation and analysis are a pair of inverse processes. Json data encapsulation methods include manual encapsulation and encapsulation using encapsulation tools. Currently, there are many available encapsulation tools that may implement json data encapsulation, such as apache tools, fastjson tools and GSON tools. Similarly, json parsing may also use manual parsing or encapsulation tools. The method of analyzing json is to convert json string into corresponding javaBean, which includes two main operations: acquiring json string and acquiring javaBean by the client.

According to the method for augmenting information of EPG provided in this embodiment, a packaged enhanced Electronic Program Guide file from a server terminal through a network is requested, based on the program information of the program currently played by the IPTV terminal and the corresponding program channel information; then the enhanced Electronic Program Guide file is processed according to a preset rule to restore the enhanced Electronic Program Guide file to EPG supplementary information and program information, when the enhanced Electronic Program Guide file is required; JSON for mobile devices, especially for poor network environment and traffic restrictions, relatively, format data transmission may save traffic and have higher transmission efficiency.

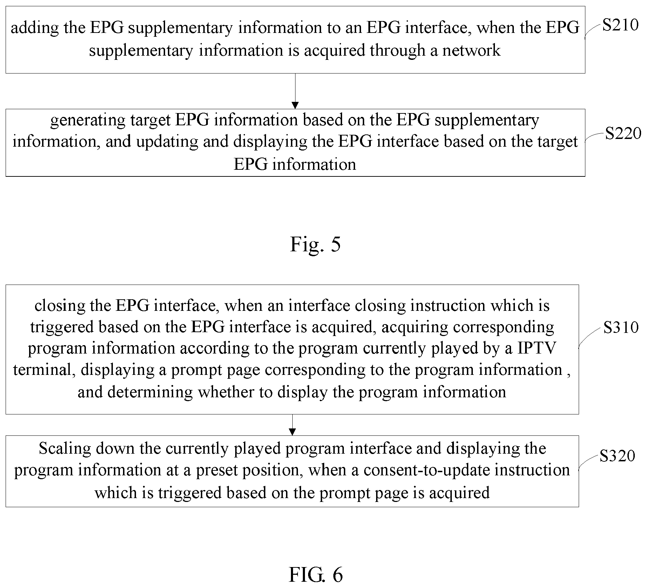

Based on the first embodiment, a fourth embodiment of the method for augmenting information of EPG of the present disclosure is proposed. Referring to fig. 5, operation S200 includes:
operation S210, adding the EPG supplementary information to an EPG interface, when the EPG supplementary information is acquired through a network.

When an IPTV terminal obtains the enhanced EPG content corresponding to a current program, it adds channel icon, program big poster, and the program preview segment to the existing EPG information through the web. Specifically, the channel icon of relevant channel may be displayed according to a channel number. Poster and program preview segment of a current played program, as well as those of programs to be played on the channel in other time, may be displayed according to the program number and the channel number.

Operation S220, generating target EPG information based on the EPG supplementary information, and updating and displaying the EPG interface based on the target EPG information.

Target EPG information refers to EPG information formed by synthesizing EPG supplementary information with existing EPG information. When the target EPG information is generated, the EPG interface is updated, and the generated target EPG information is displayed on the current EPG interface.

According to the method for augmenting information of EPG provided in this embodiment, the EPG supplementary information is added to an EPG interface, when the EPG supplementary information is acquired through a network; then target EPG information is generated based on the EPG supplementary information, and updating and displaying the EPG interface based on the target EPG information; EPG supplementary information may be conveniently obtained by using the Internet. When user opens an EPG interface, the whole process of generating EPG target information and updating the EPG interface is almost completed in an instant, thus displaying richer multimedia information for the user.

Based on the first embodiment, a fifth embodiment of the method for augmenting information of EPG of the present disclosure is proposed. Referring to fig. 6, operation S300 includes:
operation S310, closing the EPG interface, when an interface closing instruction which is triggered based on the EPG interface is acquired, acquiring corresponding program information according to the program currently played by a IPTV terminal, displaying a prompt page corresponding to the program information, and determining whether to display the program information.

When an interface closing instruction triggered based on the EPG interface is received, close the EPG interface and pops up a prompt to ask whether it is required to watch program information of a currently played program, and the program information includes related program recommendation, personnel information, and users' comments.
operation S320, scaling down the currently played program interface and displaying the program information at a preset position, when a consent-to-update instruction which is triggered based on the prompt page is acquired.

If a user does not need to view the program information, he or she may close the prompt box through a remote controller or other similar operations. If a user wants to view the program information, the user may enter a display page of the program information based on the prompt box. At this time, IPTV processes the current display as scaling down the TV play image, leaving a space on the left or right side of the TV for displaying recommended films, previous programs, related personnel information, etc. that are related to the program.

According to the method for augmenting information of EPG provided in the embodiment, the EPG interface is closed, when an interface closing instruction which is triggered based on the EPG interface is acquired, corresponding program information is acquired according to the program currently played by a IPTV terminal, a prompt page corresponding to the program information is displayed, and whether to display the program information is determined; then the currently played program interface is scaled down and the program information is displayed at a preset position, when a consent-to-update instruction which is triggered based on the prompt page is acquired; Displaying program information on side may allow users to watch program normally while browsing the information, which improves experience.

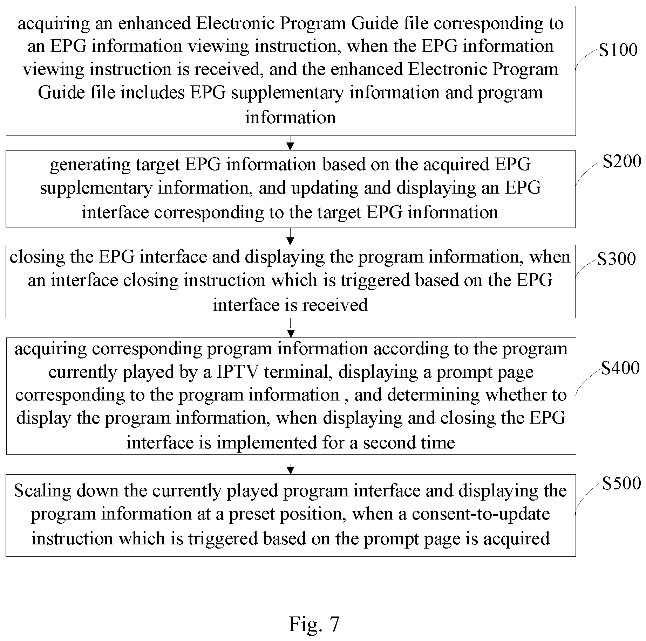

Based on the first embodiment, a sixth embodiment of the method for augmenting information of EPG of the present disclosure is proposed. Referring to fig. 7, after operation S300, the method further include:
operation S400, acquiring corresponding program information according to the program currently played by a IPTV terminal, displaying a prompt page corresponding to the program information, and determining whether to display the program information, when displaying and closing the Electronic Program Guide interface is implemented for a second time.

When a user opens and closes the EPG interface again, a prompt may pop up again to ask whether the user needs to view the program information. Specifically, when an EPG interface close instruction is obtained, corresponding program information is obtained based on the programs currently played by the IPTV terminal, and a prompt page is displayed.

Operation S500, scaling down the currently played program interface and displaying the program information at a preset position, when a consent-to-update instruction which is triggered based on the prompt page is acquired.

If a user wants to view the program information, the user may enter a display page of the program information based on the prompt box. At this time, IPTV processes the current display as scaling down the TV play image, leaving a space on the left or right side of the TV for displaying recommended films, previous programs, related personnel information, etc. that are related to the program.

According to the method for augmenting information of EPG provided in this embodiment, corresponding program information is acquired according to the program currently played by a IPTV terminal, a prompt page corresponding to the program information is displayed, and whether to display the program information is determined, when displaying and closing the Electronic Program Guide interface is implemented for a second time; then the currently played program interface is scaled down and the program information is displayed at a preset position, when a consent-to-update instruction which is triggered based on the prompt page is acquired; A user may need to view the program information which the user previously refused to view by closing the EPG interface, so when the user finishes the operation of waking up and shutting down the EPG again, a prompt may pop up again for the user to view program information, thus improving use experience.

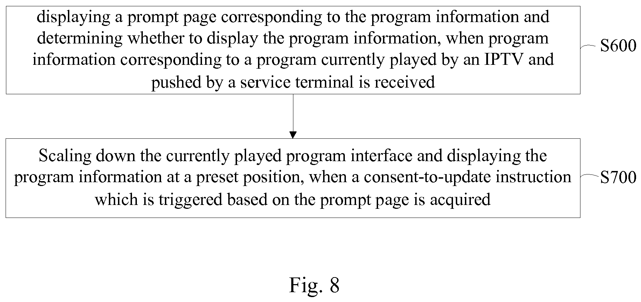

Based on the first embodiment, a seventh embodiment of the method for augmenting information of EPG of the present disclosure is proposed. Referring to fig. 8, the method further include:
operation S600, displaying a prompt page corresponding to the program information and determining whether to display the program information, when program information corresponding to a program currently played by an IPTV and pushed by a service terminal is received;
In addition to the case that a user offered to view the EPG interface and then obtain the prompt page corresponding to the displayed program information, the server may also offer to push the program information of the current program to the IPTV terminal. The server first obtains a program currently played by an IPTV terminal, and obtains the corresponding program information stored in the memory based on the program information. Display the prompt page corresponding to the program information, when the program information pushed by the server based on the currently played program is obtained to ask user whether it is required to watch program information of a currently played program, and the program information includes related program recommendation, personnel information, and users' comments.
operation S700, scaling down the currently played program interface and displaying the program information at a preset position, when a consent-to-update instruction which is triggered based on the prompt page is acquired.

If a user wants to view the program information, the user may enter a display page of the program information based on the prompt box. At this time, IPTV processes the current display as scaling down the TV play image, leaving a space on the left or right side of the TV for displaying recommended films, previous programs, related personnel information, etc. that are related to the program.

In one embodiment, after the operation of displaying a prompt page corresponding to the program information and determining whether to display the program information, the method also include:
closing the prompt page, when a rejection-to-update instruction which is triggered based on the prompt page is acquired.

If a user does not need to view the program information, he or she may close the prompt box through a remote controller or other similar operations.

According to the method for augmenting information of EPG proposed in this embodiment, a prompt page corresponding to the program information is displayed, and whether to display the program information is determined, when program information corresponding to a program currently played by an IPTV and pushed by a service terminal is received; then the currently played program interface is scaled down and the program information is displayed at a preset position, when a consent-to-update instruction which is triggered based on the prompt page is acquired; The server may push corresponding program information based on the currently played program, and pop up a prompt when playing the program to ask the user whether it is required to view. This brings user an opportunity to contact the program development information that he or she may be interested in when he or she rarely uses the EPG function, making it convenient for the user to learn more about the program while watching the program, and increasing the stickiness of use of TV.

In addition, the embodiment of the present disclosure also provides a computer readable storage medium.

A computer readable storage medium according to the present disclosure has EPG information augmenting program stored therein, and when the EPG information augmenting program is executed by a processor, the following operations are implemented:
acquiring an enhanced Electronic Program Guide file corresponding to an EPG information viewing instruction, when the EPG information viewing instruction is received, and the enhanced Electronic Program Guide file includes EPG supplementary information and program information;
generating target EPG information based on the acquired EPG supplementary information, and updating and displaying an EPG interface corresponding to the target EPG information; and
closing the EPG interface and displaying the program information, when an interface closing instruction which is triggered based on the EPG interface is received.

When the EPG information augmenting program is executed by a processor, the following operations are further implemented:
acquiring program information of the program currently played by an IPTV terminal and corresponding program channel information, when an EPG information viewing instruction is received; and
acquiring EPG supplementary information based on the program channel, and acquiring program information based on the current program.

When the EPG information augmenting program is executed by a processor, the following operations are further implemented:
requesting a packaged enhanced Electronic Program Guide file from a server terminal through a network, based on the program information of the program currently played by the IPTV terminal and the corresponding program channel information; and
processing the enhanced Electronic Program Guide file according to a preset rule to restore the enhanced Electronic Program Guide file to EPG supplementary information and program information, when the enhanced Electronic Program Guide file is required.

When the EPG information augmenting program is executed by a processor, the following operations are further implemented:
adding the EPG supplementary information to an EPG interface, when the EPG supplementary information is acquired through a network; and
generating target EPG information based on the EPG supplementary information, and updating and displaying the EPG interface based on the target EPG information.

When the EPG information augmenting program is executed by a processor, the following operations are further implemented:
closing the EPG interface, when an interface closing instruction which is triggered based on the EPG interface is acquired, acquiring corresponding program information according to the program currently played by a IPTV terminal, displaying a prompt page corresponding to the program information, and determining whether to display the program information; and
scaling down the currently played program interface and displaying the program information at a preset position, when a consent-to-update instruction which is triggered based on the prompt page is acquired.

When the EPG information augmenting program is executed by a processor, the following operations are further implemented:
acquiring corresponding program information according to the program currently played by a IPTV terminal, displaying a prompt page corresponding to the program information, and determining whether to display the program information, when displaying and closing the Electronic Program Guide interface is implemented for a second time; and
scaling down the currently played program interface and displaying the program information at a preset position, when a consent-to-update instruction which is triggered based on the prompt page is acquired.

When the EPG information augmenting program is executed by a processor, the following operations are further implemented:
displaying a prompt page corresponding to the program information and determining whether to display the program information, when program information corresponding to a program currently played by an IPTV and pushed by a service terminal is received; and
scaling down the currently played program interface and displaying the program information at a preset position, when a consent-to-update instruction which is triggered based on the prompt page is acquired.

When the EPG information augmenting program is executed by a processor, the following operations are further implemented:
closing the prompt page, when a rejection-to-update instruction which is triggered based on the prompt page is acquired.

It should be noted that in this document, the terms "include" "comprise" or any other variation thereof are intended to cover a non-exclusive inclusion, such that a process, method, article, or system that includes a list of elements includes not only those elements, but also other elements not expressly listed, or elements inherent to such process, method, article, or system. Without further restrictions, an element defined by the statement " includes an ..." does not exclude the presence of another identical element in a process, method, article or system that includes the element.

The above-mentioned serial numbers of the embodiments of the present disclosure are for description only and do not represent the advantages and disadvantages of the embodiments.

From the above description of the embodiments, those skilled in the art can clearly understand that the methods of the above embodiments may be implemented by means of software plus necessary general-purpose hardware platforms. Of course, it may also be implemented by means of hardware, but in many cases, the former is a better embodiment. Based on the understanding, of the technical schemes the essence or the part that contributes to prior art may be embodied in the form of a software product, which is stored in a storage medium (such as ROM/RAM, magnetic disk, optical disk) as described above, and includes a number of instructions to cause a terminal device (which may be a mobile phone, a computer, a server, an air conditioner, or a network device) to perform the methods described in each embodiment of the present disclosure.

The above is only the preferred embodiment of the present disclosure and is not therefore limiting the scope of the patent of the present disclosure. Any equivalent structure or equivalent process change made by using the contents of the present specification and drawings, or directly or indirectly applied in other related technical fields, is similarly included in the scope of the patent protection of the present disclosure.

## Claims

1. A method for augmenting information of Electronic Program Guide, **characterized in that**, the method comprises the following operations:
acquiring an enhanced Electronic Program Guide file corresponding to an Electronic Program Guide information viewing instruction when the Electronic Program Guide information viewing instruction is received, wherein the enhanced Electronic Program Guide file comprises Electronic Program Guide supplementary information and program information;
generating target Electronic Program Guide information based on the acquired Electronic Program Guide supplementary information, updating and displaying an Electronic Program Guide interface corresponding to the target Electronic Program Guide information; and
closing the Electronic Program Guide interface and displaying the program information, when an interface closing instruction which is triggered based on the Electronic Program Guide interface is received.

2. The method according to claim 1, wherein the operation of acquiring an enhanced Electronic Program Guide file corresponding to an Electronic Program Guide information viewing instruction when the Electronic Program Guide information viewing instruction is received comprises:
acquiring program information of the program currently played by an IPTV terminal and corresponding program channel information, when the Electronic Program Guide information viewing instruction is received; and acquiring Electronic Program Guide supplementary information based on the program channel, and acquiring program information based on the program currently played.

3. The method according to claim 2, wherein the operation of acquiring Electronic Program Guide supplementary information based on the program channel, and acquiring program information based on the program currently played comprises:
requesting a packaged enhanced Electronic Program Guide file from a server terminal through a network, based on the program information of the program currently played by the IPTV terminal and the corresponding program channel information; and
processing the enhanced Electronic Program Guide file based on a preset regulation to restore the enhanced Electronic Program Guide file to Electronic Program Guide supplementary information and program information, when the enhanced Electronic Program Guide file is obtained.

4. The method according to claim 1, wherein the operation of generating target Electronic Program Guide information based on the acquired Electronic Program Guide supplementary information, and updating and displaying an Electronic Program Guide interface corresponding to the target Electronic Program Guide information comprises:
adding the Electronic Program Guide supplementary information to the Electronic Program Guide interface, when the Electronic Program Guide supplementary information is acquired through network; and
generating target Electronic Program Guide information based on the Electronic Program Guide supplementary information, and updating and displaying the Electronic Program Guide interface based on the target Electronic Program Guide information.

5. The method according to claim 1, wherein the operation of closing the Electronic Program Guide interface and displaying the program information when an interface closing instruction which is triggered based on the Electronic Program Guide interface is received comprises:
closing the Electronic Program Guide interface when the interface closing instruction triggered based on the Electronic Program Guide interface is acquired, and acquiring corresponding program information according to the program currently played by a IPTV terminal, displaying a prompt page corresponding to the program information, and determining whether to display the program information; and
scaling down the currently played program interface and displaying the program information at a preset position, when a consent-to-update instruction triggered based on the prompt page is acquired.

6. The method according to claim 1, wherein after the operation of closing the Electronic Program Guide interface and displaying the program information when an interface closing instruction which is triggered based on the Electronic Program Guide interface is received, the method further comprises:
acquiring corresponding program information according to the program currently played by a IPTV terminal, displaying a prompt page corresponding to the program information, and determining whether to display the program information, when displaying and closing the Electronic Program Guide interface is implemented for a second time; and
scaling down the currently played program interface and displaying the program information at a preset position, when a consent-to-update instruction triggered based on the prompt page is acquired.

7. The method according to claim 1, wherein the method further comprises the following operations:
displaying a prompt page corresponding to the program information and determining whether to display the program information, when program information corresponding to a program currently played by an IPTV is received from a service terminal; and
scaling down the currently played program interface and displaying the program information at a preset position, when a consent-to-update instruction which is triggered based on the prompt page is acquired.

8. The method according to claim 4, wherein after the operation of displaying a prompt page corresponding to the program information and determining whether to display the program information, the method further comprises:
closing the prompt page, when a rejection-to-update instruction triggered based on the prompt page is acquired.

9. The method according to claim 6, wherein after the operation of displaying a prompt page corresponding to the program information and determining whether to display the program information, the method further comprises:
closing the prompt page, when a rejection-to-update instruction triggered based on the prompt page is acquired. closing the prompt page, when a rejection-to-update instruction triggered based on the prompt page is acquired

10. The method according to claim 7, wherein after the operation of displaying a prompt page corresponding to the program information and determining whether to display the program information, the method further comprises:
closing the prompt page, when a rejection-to-update instruction triggered based on the prompt page is acquired.

11. A device for augmenting information of Electronic Program Guide, **characterized in that**, the device comprises: a memory, a processor, and an EPG information augmenting program stored in the memory and running on the processor, wherein when the EPG information augmenting program is executed by the processor, the following operations are i mpl emented:
acquiring an enhanced Electronic Program Guide file corresponding to an Electronic Program Guide information viewing instruction, when the Electronic Program Guide information viewing instruction is received, wherein the enhanced Electronic Program Guide file comprises Electronic Program Guide supplementary information and program information;
generating target Electronic Program Guide information based on the acquired Electronic Program Guide supplementary information, and updating and displaying an Electronic Program Guide interface corresponding to the target Electronic Program Guide information; and
closing the Electronic Program Guide interface and displaying the program information, when an interface closing instruction which is triggered based on the Electronic Program Guide interface is received.

12. The device according to claim 11, wherein when the EPG information augmenting program is executed by the processor, the following operations are also implemented:
acquiring corresponding program information according to the program currently played by a IPTV terminal, displaying a prompt page corresponding to the program information, and determining whether to display the program information, when displaying and closing the Electronic Program Guide interface is implemented for a second time; and
scaling down the currently played program interface and displaying the program information at a preset position, when a consent-to-update instruction which is triggered based on the prompt page is acquired.

13. The device according to claim 11, wherein when the EPG information augmenting program is executed by the processor, the following operations are further implemented:
displaying a prompt page corresponding to the program information and determining whether to display the program information, when program information corresponding to a program currently played by an IPTV and pushed by a service terminal is received; and
scaling down the currently played program interface and displaying the program information at a preset position, when a consent-to-update instruction which is triggered based on the prompt page is acquired.

14. A computer readable storage medium, **characterized in that**, an EPG information augmenting program is stored in the computer readable storage medium, and when the EPG information augmenting program is executed by a processor, the following operations are implemented:
acquiring an enhanced Electronic Program Guide file corresponding to an Electronic Program Guide information viewing instruction, when the Electronic Program Guide information viewing instruction is received, wherein the enhanced Electronic Program Guide file comprises Electronic Program Guide supplementary information and program information;
generating target Electronic Program Guide information based on the acquired Electronic Program Guide supplementary information, and updating and displaying an Electronic Program Guide interface corresponding to the target Electronic Program Guide information; and
closing the Electronic Program Guide interface and displaying the program information, when an interface closing instruction which is triggered based on the Electronic Program Guide interface is received.

15. The computer readable storage medium according to claim 14, wherein when the EPG information augmenting program is executed by the processor, the following operations are further implemented:
acquiring corresponding program information according to the program currently played by a IPTV terminal, displaying a prompt page corresponding to the program information, and determining whether to display the program information, when displaying and closing the Electronic Program Guide interface is implemented for a second time; and
scaling down the currently played program interface and displaying the program information at a preset position, when a consent-to-update instruction which is triggered based on the prompt page is acquired.
